# EUROPEAN PATENT APPLICATION

(11) **EP 1 375 546 A1**
(43) Date of publication of application: **02.01.2004**
(21) Application number: 02013830.1
(22) Date of filing: 21.06.2002
(51) Int. Cl.: C08G 18/24, C08G 77/00

(54) **Low emission tin catalysts**

(71) Applicant: Crompton GmbH, 59192 Bergkamen (DE)
(72) Inventor: Schumacher, Oliver, Dr., 59368 Werne (DE)
(74) Representative: Wibbelmann, Jobst, Dr., Dipl.-Chem.

(57) **Abstract**

Plastic articles with low emission obtainable by polymerization, condensation, and/or crosslinking reaction including the use of metal catalysts wherein said metal catalyst has a low emissivity and is an organotin compound of the general formula

**R**_{**2**}**SnX**_{**2**}

wherein R is a C₁-C₈-hydrocarbyl, X is a carboxylate group with 14-20 carbon atoms having at least one olefinic double bond. Moreover, the invention relates to the use of an organotin compound in the manufacture of plastic articles with low emissivity of said organotin compound.

## Description

### BACKGROUND OF THE INVENTION

### 1. Field of the Invention

The present invention is related to the use of simple tin catalysts for the manufacturing of polyurethane foams with significantly reduced emission. More particularly, the present invention is related to the use of dialkyltin dicarboxylates R₂SnX₂ which are derived from carboxylic acids with particularly low emissivity, but provide high activity for catalyzing the reaction of isocyanates with polyols and are highly compatible with the components of typical polyurethane formulations.

### 2. Description of Related Art

Tin compounds are well known as very effective catalysts for the manufacturing of polyurethanes, silicones, and polyesters.

Polyurethanes are basically manufactured by reaction of isocyanates with polyols. Commonly used isocyanates are either aromatic or aliphatic di- or polyisocyanates, commonly used polyols are either polyetherpolyols or polyesterpolyols. Polyurethanes derived from aliphatic isocyanates have the general advantage of a better light stability than polyurethanes derived from aromatic isocyanates. Aliphatic isocyanates are generally less reactive than aromatic isocyanates and hence require particularly strong catalysts; typically organotin catalysts are used, either alone or in combination with other catalysts.

Polymers, and in particular polyurethanes are of increasing importance in the manufacturing of modern car interiors. E.g. US 5656677 teaches the use of polyurethane foams derived from aliphatic isocyanates for the manufacturing of light stable car interiors.

A general problem connected with the use of plastics in car interiors is the emission of volatile organic compounds at elevated temperatures; said volatile organic compounds may form condensate films on the car windows, reducing the visual transparency and thereby causing the so called "fogging effect". The emissivity ("fogging") properties of a plastic material are determined either by the amount (by weight) of condensate formed under defined conditions, or by the loss of transparency caused by this condensate on a glass sheet.

Modern plastic materials are formulations of different base materials and additives, which can separately or in combination contribute to the fogging. Several efforts have been undertaken to reduce the fogging from plastic materials by optimising base materials and additives. In manufacturing of polyurethanes, e.g., major achievements have already been made by the introduction of purified polyesterpolyols (with reduced contents of volatile cyclic esters), and by the elimination of volatile antioxidant additives (see e.g.: EP 1153951 to Bayer; DE 19611670 to BASF; G. Baatz, S. Franyutti, Paper 9, UTECH '94 Conference,.1994, The Hague).

Facing increasingly tight regulations and consumer demands, further reductions of emission levels are required. After elimination of the previous main contributors, further improvement has to target the so-far neglected minor additives. Among said additives, particularly urethane catalysts contribute to the fogging.

Common catalysts for the urethane reaction are tertiary amines, stannous tin compounds, dialkyltin compounds, and compounds of other metals. The mentioned classes of catalysts may contribute to fogging either because of their own volatility (e.g. amines), or by formation of volatile reaction products or degradation products. Attempts have been reported to reduce the fogging properties of said catalysts: using catalysts which are reactive with isocyanates can lead to firm fixation of those catalysts in the polymer matrix and thereby reduce fogging. Examples for isocyanate-reactive amines are given e.g. in EP0799821 (and in the literature cited there). Examples for isocyanate-reactive dialkyltin catalysts are given e.g. in EP0417605. A general drawback of such isocyanate-reactive catalysts is their reduced catalytic activity. Also, reaction with the isocyanate and incorporation into the polymer matrix changes the polymer properties.

A useful polyurethane catalyst must have high activity for the urethane reaction, and a sufficiently high selectivity for the urethane reaction over undesired side reactions. Furthermore, it should be storage stable, readily soluble in and compatible with the polyols and/or the isocyanates, and best be liquid at ambient temperature.

Dialkyltin compounds are well known for their strong catalytic power in polyurethane reactions, and are often indispensable in order to achieve the required material properties. Particularly useful are dialkyltin dicarboxylates. Among the dialkyltin dicarboxylate polyurethane catalysts, dimethyltin dicarboxylates are the strongest.

The most common carboxylate types for dialkyltin dicarboxylate catalysts are acetate, 2-ethylhexanoate, neodecanoate, and laurate. All dialkyltin carboxylates containing these carboxylate types contribute to fogging, not only by their own volatility, but particularly by the volatility of their degradation products, the most important being the corresponding carboxylic acids.

It can be reasonably expected that dialkyltin dicarboxylates derived from carboxylic acids with longer alkyl chain than lauric acid would contribute less to fogging.

When simply the length of the carboxylate alkyl chain of a dialkyltin carboxylate is further increased (e.g. to saturated C₁₃ - C₁₇), one significant drawback is a decrease in the catalytic activity. Even more important drawbacks are the higher melting points ( e.g. dimethyltin dimyristate approx. 70°C, dimethyltin dipalmitate approx. 80°C), the limited solubility in the typical main components of polyurethane formulations (i.e. polyols and/or isocyanates), and the limited compatibility with said main components.

Certain dialkyltin dicarboxylates having 13 or more carbon atoms and at least one olefinic double bond in the carboxylate alkyl chain are liquid at ambient temperature. Example are oleates, ricinoleates, linolates, and linoleates of dimethyltin and dibutyltin.

E.g., dimethyltin dioleate has been described as a heat stabiliser for PVC. No reference to polyurethane catalysis was made. Furthermore, GB1250498 teaches the use of a "basic dimethyltin oleate" as a curing catalyst for silicone rubbers. Said " basic dimethyltin oleate" is described as a "Harada complex" R₂SnA₂^{*}R₂SnO; according to the modern state-of-the-art, it would be called 1,1',3,3'-tetramethyl-1,3-oleoyloxo-1,3,2-stannoxane.

E.g., dibutyltin dioleate has been described as a heat stabiliser for PVC, as solvent extraction agent for arsenate ions, as catalyst for esterifications, as catalyst for curing of silicones and as catalyst for curing of electrodeposition coatings. One publication (R. V. Russo, J. Cell. Plast. 12, (1976), 203) reported comparative testing of dibutyltin dioleate as polyurethane foam catalyst, but said article teaches that dibutyltin dioleate is a particularly poor catalyst. No reference to emissivity was made.

E.g., use of dioctyltin diricinoleate has been reported as a polyurethane gelation catalyst, having reduced toxicity (US4332927 to Caschem). No reference to emissivity was made.

### SUMMARY OF THE INVENTION

The present invention is directed to low emission organotin compounds of the general formula

**R**_{**2**}**SnX**_{**2**}

wherein R is C₁-C₈-hydrocarbyl, preferred are methyl and butyl, particularly preferred is methyl. X is a carboxylate group with 14-20 carbon atoms having at least one olefinic double bond, optionally substituted; preferred are oleate, ricinoleate, linoleate and linolenate; particularly preferred is oleate.
These compounds can be used as low emission catalysts in all fields of applications where organotin compounds are known to be useful as catalysts. Such fields include, but are not limited to, catalysis of esterification and transesterification reactions, condensation curing of RTV II silicones, curing of cataphoretic electrodeposition coatings, deblocking of blocked isocyanates, and, especially, curing of the synthesis of polyurethanes by the reaction of isocyanates with polyols. Advantageous is particularly the low emissivity, but high activity for catalyzing the reaction of isocyanates with polyol, and high compatibility with the typical components of polyurethane formulations.

The invention is further directed to the use of said organotin compounds as catalysts for the production of low emission polyurethanes, particularly for use in car interiors. Especially preferred is the use of said catalysts for the production of polyurethanes derived from aliphatic isocyanates. The inventive catalysts can be used alone or in combination with other catalysts.

### DESCRIPTION OF THE PREFERRED EMBODIMENTS

The present invention is directed to low emission dialkyltin dicarboxylates of the general formula

**R**_{**2**}**SnX**_{**2**}

R is a C₁-C₈-hydrocarbyl group. Typically, R is an aliphatic, saturated, unbranched, and not further substituted alkyl group, such as methyl, ethyl, propyl, butyl, pentyl, hexyl, heptyl and octyl,.
Preferred alkyl groups are methyl, butyl, and octyl. Particularly preferred is methyl. X is a carboxylate group derived from a carboxylic acid of the type

**R'-COOH**

wherein R' is a C₁₃-C₁₉-hydrocarbyl group having one or more olefinic double bonds. Typically, R' is an aliphatic and unbranched alkenyl group; it may be further substituted, e.g., with one or more hydroxy groups. The alkenyl group may be present in the cis-form, or in the trans-form, or a mixtures of both forms.
Preferred carboxylate groups are oleate, ricinoleate, linoleate and linolenate. Particularly preferred is oleate.
Said low emission dialkyltin dicarboxylates can be synthesised from commercially available raw materials using standard synthesis methods for dialkyltin dicarboxylates; e.g. by reaction of dialkyltin oxides with carboxylic acids, or by reaction of dialkyltin dichlorides with alkali carboxylates, or by reaction of dialkyltin dichlorides with carboxylic acids and bases, etc.
Said low emission dialkyltin dicarboxylates are liquid at room temperature, or melt at a low temperature slightly above room temperature. They are well soluble or mixable with polyetherpolyols and/or polyesterpolyols, which are widely used in the manufacturing of polyurethanes. Several of said low emission dialkyltin dicarboxylates are soluble in aliphatic and/or aromatic isocyanates, which are widely used in the manufacturing of polyurethanes. When dissolved, they have an excellent compatibility with said polyols and isocyanates, and do not precipitate from solution when stored at ambient temperature. When dissolved in isocyanates, they do not promote the formation of isocyanurates (isocyanate trimers), which is a common side-reaction of several other organotin catalysts.
Said low emission dialkyltin dicarboxylates have only very low volatility, and when degraded by hydrolysis, alcoholysis, acidolysis, or related reactions, the degradation products formed therefrom also have only very low volatility.
Said low emission dialkyltin dicarboxylates have a high but at least sufficient catalytic activity for catalyzing the reaction of isocyanates with alcohols to form urethanes.

The present invention is further directed to the use of said low emission dialkyltin dicarboxylates as catalysts for the production of low emission polyurethanes or polysilicones.

Said low emission polyurethanes or polysilicones produced by to the use of said low emission dialkyltin dicarboxylates may appear in any form generally applicable to polyurethanes or polysilicones, as foams (rigid, flexible, high resiliency, integral, microcellular), RIM, RRIM, elastomers, coatings, etc.

By use of said low emission dialkyltin dicarboxylate catalysts, any general type of low emission polyurethane or polysilicone may be produced: foams (rigid, flexible, high resiliency, integral, microcellular...), RIM, RRIM, elastomers, coatings, etc.

Preferred low emission polyurethanes are polyurethane foams.

Also preferred low emission polyurethanes are light stable polyurethanes derived from aliphatic isocyanates.

In manufacturing of low emission polyurethanes, the inventive low emission dialkyltin dicarboxylate catalysts can be used either alone or in combination with other catalysts. Especially, the well know synergy of dialkyltin compounds with tertiary amines in the catalysis of the urethane reaction may be used to enhance the catalytic power of the inventive dialkyltin dicarboxylate catalysts. Also, in the production of water blown foam, tertiary amine catalysts may be used to speed and direct the reaction of isocyanates with water. Examples of further common catalysts which may be used together with the inventive catalysts include metals compounds of stannous tin, Ti, Pb, Hg, Bi, Fe, Ni ...

In production of a polyurethane, the inventive low emission dialkyltin dicarboxylate catalysts can be either added prior to the reaction to the polyol component, or to the isocyanate component, or it can be admixed with other additives to form a master blend, or it can be added directly to the reaction mixture.

The isocyanates commonly used in the production of polyurethanes are well know to those skilled in the art. Examples include TDI (toluene diisocyanate, typically mixtures of the para-isomer, and the ortho-isomer), MDI (4,4'-diphenylmethane diisocyanate), polymeric MDI, IPDI (isophorone diisocyanate), HDI (hexamethylene diisocyanate). The isocyanates are either used as such, or can also be used in a blocked form; when used in a blocked form, the blocking agent has to be cleaved of the isocyanate shortly before or during the processing.

The polyols commonly used in the production of polyurethanes are also well known to those skilled in the art. The most important classes are polyesterpolyols and polyetherpolyols, which are basically polyester resp. polyether chains, terminated and optionally further substituted with isocyanate-reactive hydroxyl groups. E.g., the most commonly used polyetherpolyols are derived from ethylen oxide and/or propylene oxide.

The polyurethane may contain further additives (like blowing agents, foam stabilisers, chain extenders, flame retardants, fillers, pigments etc.), known to those skilled in the art.

The present invention is further directed to the use of said low emission polyurethanes for use in car interiors.

The advantages and the important features of the present invention will be more apparent from the following examples.

### EXAMPLES

### Glossary:

Polyol 1 is a 3500 MW polyether polyol, (OH-No. approx. 38) available from Elastogran as Lupranol 3032.
Polyol 2 is a 4700 MW polyether polyol (OH-No. approx. 36), available from Shell Chemicals as Caradol ET 36-17.
Polyol 3 is a 6000 MW polyether polyol (OH-No. approx. 28), available from DOW Chemicals as Voranol CP 6001.
Polyol 4 is a 6000 MW polyether polyol (OH-No. approx. 32-35), available from DOW Chemicals as Voranol CP 1421.
Isocyanate 1 is toluene diisocyanate (TDI, mixture of 80% para, and 20% ortho). Isocyanate 2 is Isophorone diisocyanate (IPDI).
Isocyanate 3 is 4,4'-Diphenylmethane diisocyanate (MDI 2447).
Foam stabiliser 1 is a silicone, available from Crompton Corp. as Niax RS-171. Amine cocatalyst 1 is Diethanolamine (DEOA).
Amine cocatalyst 2 is blend of bis(dimethylaminoethyl)ether and dipropylene glycol, available from Crompton Corp. as Niax A-1.

### Example 1

### Preparation of the Catalysts

### 1 a) Preparation of dimethyltin dioleate from dimethyltin dichloride

Into a 3-neck glass flask, equipped with a mechanical stirrer, thermometer, dropping funnel, and pH glass electrode, were placed 44 g of dimethyltindichloride (0.2 mol) and 44 g of water. The mixture was stirred until the dimethyltindichloride is completely dissolved. 113 g of oleic acid (0.4 mol) were added and the mixture was heated to 60°C.

An aqueous NaOH solution (35.5% by weight) was placed into the dropping funnel. While stirring, the NaOH solution was slowly added to the reaction mixture. NaOH addition was stopped when a pH of approx. 6 had been reached.

The mixture was heated to approx. 80 °C, then the stirrer was stopped and the phases allowed to settle.

The phases were separated and the lower (aqueous) phase discarded. The organic phase was dried in a rotary evaporator at approx. 80°C / 1 mbar, and subsequently further dried with Na2SO4. Finally, 1% of Celite (a filter aid) were added and the product was filtered.

Yield: 136.6 g of dimethyltin dioleate (96.0% of theor.). The product was a clear yellow liquid, and contained 15.8% Sn (theor. 16.7%), and 0.0% Cl (theor. 0.0%).

### 1 b) Preparation of dimethyltin dioleate from dimethyltin oxide

Into a 3-neck glass flask, equipped with a mechanical stirrer, thermometer, and a vacuum connector, were placed 57.7g of dimethyltin oxide (0.35 mol) and 197.6 g of oleic acid (0.7 mol). While stirring, the mixture was heated to 40°C, and a vacuum of 10 mbar was applied. During 1 hour the temperature was slowly risen to 70°C, and was subsequently held for another hour. Subsequently a vacuum of 1 mbar was applied, and the reaction mixture was further stirred for 1 more hour.

The vacuum was broken, and the reaction mixture was allowed to cool to room temperature. Finally, 1% of Celite (a filter aid) were added and the product was filtered.

Yield: 245.8 g of dimethyltin dioleate (98.7% of theor.). The product contained 16.5% Sn (theor. 16.7%).

It was a clear yellow liquid, having a viscosity of 100 mPa^{*}s. It was miscible with Polyols 1, 2, and 3. It was readily soluble in Isocyanates 1, 2, and 3.

A 1% solution (by weight) of the product in Isocyanate 2 was prepared and stored at 25°C. After 3 weeks the solution was still clear, no solid material had formed and the infrared spectrum of the solution did not show the carbonyl band of an isocyanurate.

### 1 c-g) Preparation of further dialkyltin dicarboxylates

Following the procedure described in example 1 b, the following materials were synthesised (see table 1):

**Table 1**

| Experiment | Dialkyltin oxide | Carboxylic acid | Product | Yield (% of theor.) |
|---|---|---|---|---|
| 1c | Dibutyltin oxide | Oleic acid | Dibutyltin oleate | 97.6 |
| 1d | Dioctyltin oxide | Oleic acid | Dioctyltin oleate | 97.2 |
| 1e | Dimethyltin oxide | Ricinoleic acid | Dimethyltin ricinoleate | 96.3 |
| 1f | Dimethyltin oxide | Linoleic acid | Dimethyltin linoleate | 96.9 |
| 1g | Dimethyltin oxide | Linolenic acid | Dimethyltin linolenate | 98.1 |

### Example 2

### Catalyst Activity Tests

### Viscosity Measurement in Elastomers based on aromatic Isocyanates (TDI)

80 g of Polyol 1 were placed at room temperature into a dry 100 mL wide-neck glass bottle. 0.0002 mol of the respective organotin catalyst were added. The mixture was stirred for 2 minutes to dissolve the catalyst.

0.036 mol of Isocyanate 1 were added, and the mixture stirred for 2 more minutes. The bottle was then placed under a Brookfield rotary viscosimeter. The raw mixture had a Brookfield viscosity of << 1 Pa^{*}s. Sample temperature and viscosity were recorded until the mixture became too viscous for further measurement (> 25 Pa^{*}s). In each experiment, the time of isocyanate addition to the polyol considered as the start of the reaction (t = 0 min). Results are summarised in table 2.

**Table 2**

| Example Catalyst | 2a Dimethyltin dioleate | 2b Dibutyltin dilaurate (comparison) | 2c Dimethyltin dineodecanoate (comparison) | 2d No Catalyst |
|---|---|---|---|---|
| Time (min) | Viscosity (mPa^{*}s) | Viscosity (mPa^{*}s) | Viscosity (mPa*s) | Viscosity (mPa^{*}s) |
| 0 | | | | |
| 2 | | | | |
| 4 | 800 | 600 | 1100 | 600 |
| 6 | 1000 | 800 | 1300 | 600 |
| 8 | 1300 | 1000 | 1900 | 600 |
| 10 | 1800 | 1400 | 2900 | 600 |
| 12 | 2400 | 1800 | 4700 | 600 |
| 14 | 3200 | 2200 | 7800 | 600 |
| 16 | 4100 | 2900 | 14000 | 600 |
| 18 | 5300 | 3600 | > 25000 | 600 |
| 20 | 7200 | 4400 | | 600 |
| 22 | 9200 | 5500 | | 600 |
| 24 | 12100 | 6800 | | 600 |
| 26 | 16100 | 8400 | | 600 |
| 28 | 21700 | 10300 | | 600 |
| 30 | > 25000 | 13100 | | 600 |

### Example 3

### Catalyst Activity Tests

### Viscosity Measurement in Elastomers based on aromatic Isocyanates (TDI)

Example 2 was repeated with the difference that after mixing of all components at room temperature the glass bottle was immersed in an oil heating bath. The oil bath was heated at a nearly constant rate from room temperature to 100°C, and was than held at this temperature (heating to 100°C takes typically approx. 20 minutes). In each experiment, the time of isocyanate addition to the polyol considered as the start of the reaction (t = 0 min). Results are summarised in table 3.

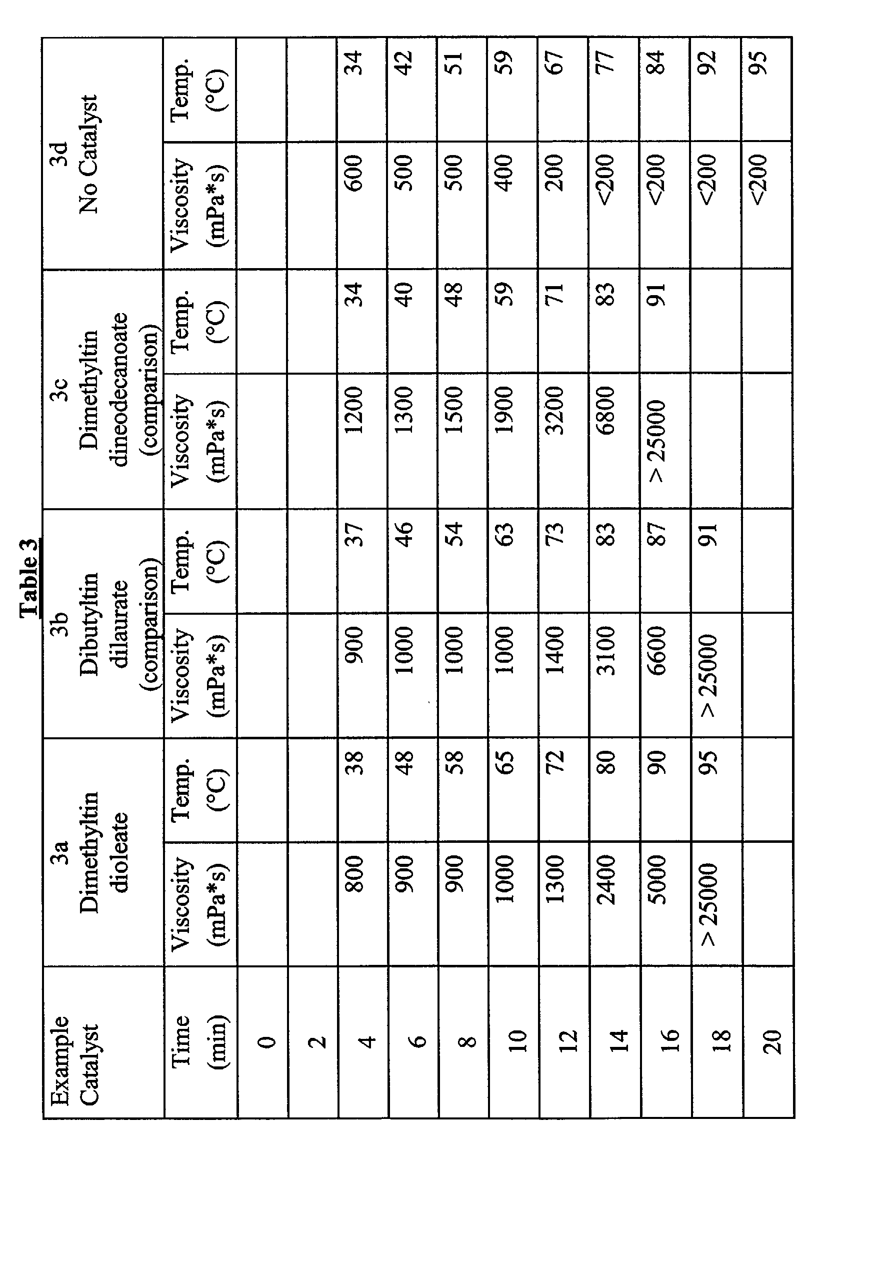

### Example 4

### Viscosimetric Catalyst Activity Tests

### Elastomer based on aliphatic Isocyanate(IPDI)

75 g of Polyol 2 were placed at room temperature into a dry 100 mL wide-neck glass bottle.

In a dry glass flask, 0.00016 mol of the respective organotin catalyst and 5,6 g of Isocyanate 2 are mixed by stirring.

The isocyanate/catalyst mixture is added to the polyol at room temperature, and the mixture stirred for 2 more minutes. The glass bottle was immersed in an oil heating bath, placed under a Brookfield rotary viscosimeter. The oil bath was heated at a nearly constant rate from room temperature to 100°C, and was than held at this temperature (heating to 100°C takes typically approx. 20 minutes). The raw mixture had a Brookfield viscosity of << 1 Pa^{*}s. Sample temperature and viscosity were recorded until the mixture became too viscous for further measurement (> 25 Pa^{*}s). In each experiment, the time of isocyanate addition to the polyol considered as the start of the reaction (t = 0 min). Results are summarised in table 4.

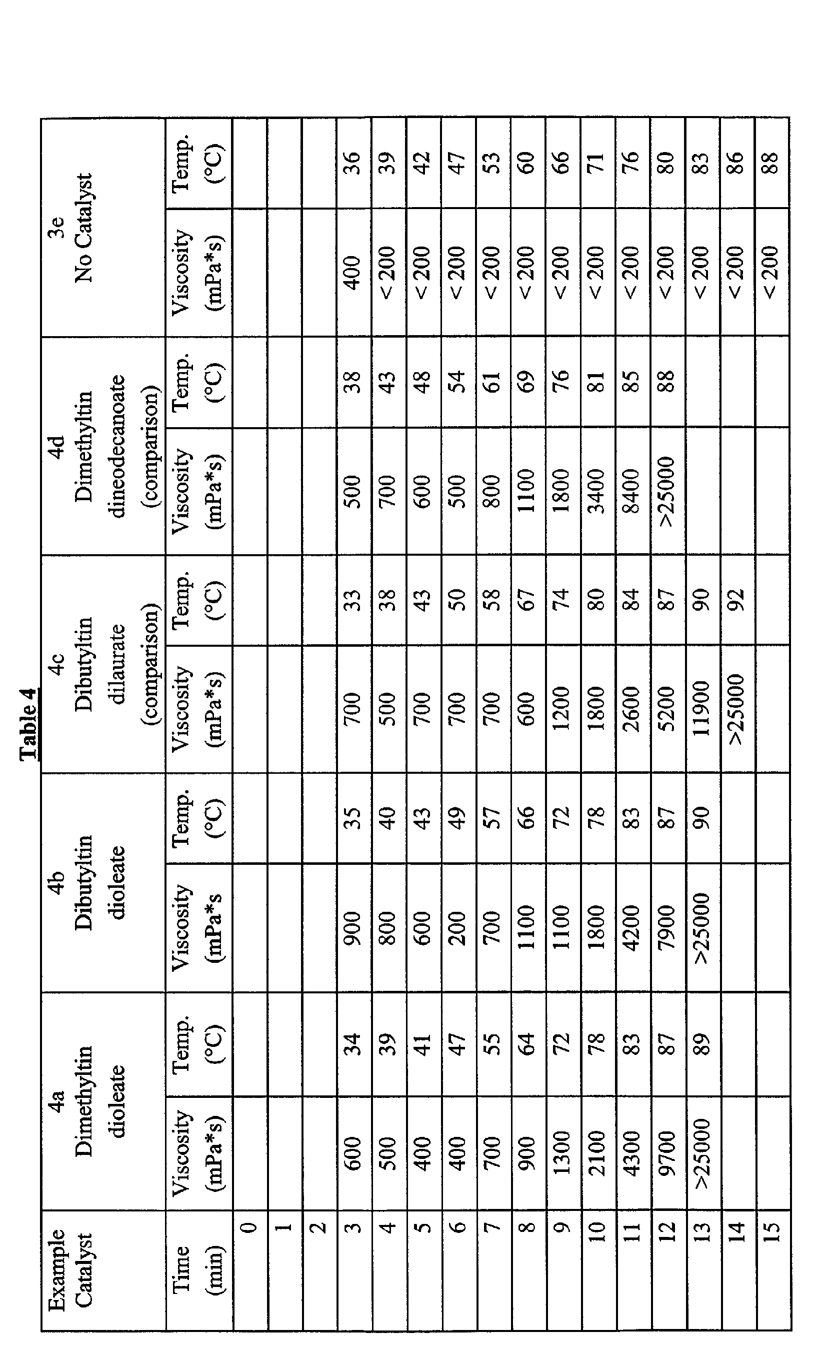

### Example 5

### Preparation of Polyurethane Foams

### Water blown Foams from Polyether Polyols and aromatic Isocyanate (MDI)

100 g of Polyol 3 and 2 g of Polyol 4 were mixed and placed into a cardboard cup.

A master blend was made of 3.6 g of water, 0.5 g of Foam stabiliser 1, 0,6 g of Amine cocatalyst 1, and 0.15 g of Amine cocatalyst 2. The blend was added to the polyol and mixed.

0.5 g of the resp. organotin catalyst was added to the mixture and the mixture was stirred for 2 minutes.

61.8 g of Isocyanate 3 (index 100) were quickly added to the mixture. The mixture was stirred for 10 seconds, and than poured into a cardboard box.

A polyurethane foam formed and expanded. Cream time and rise time of the foam were recorded.

Results are summarised in Table 5.

**Table 5**

| Example Catalyst | 5a Dimethyltin dioleate | 5b Dibutyltin dilaurate (comparison) | 5c Dimethyltin dineodecanoate (comparison) |
|---|---|---|---|
| Cream Time (s) | 10 | 10 | 8 |
| Rise Time (s) | 54 | 44 | 45 |

### Example 6

### Determination of the Fogging of Catalysts by Gravimetry

A dry, clean round piece of aluminum foil (diameter 103 mm, thickness 0.03 mm) was weighed. 5 g of the resp. liquid organotin catalyst and 0.5 g of water were placed onto the bottom of a dry and clean glass beaker (inner diameter 80 mm, outer diameter 90 mm).

A silicone rubber ring was fitted to the neck of the beaker, the aluminum foil was placed on top of it, and covered with a glass sheet (110 x 110 x 3 mm). The beaker was hang into a thermostated glycerol heating bath in such a way, that the glass sheet was 60 mm above the glycerol level. An aluminum cooling block (connected to another thermostat) was placed onto the glass sheet. For 16 hours, a glycerol bath temperature of 100°C, and a cooling block temperature of 21°C was maintained. Subsequently, the aluminum foil was placed into a dessicator and kept there for 1 hour at room temperature over silica.

The aluminum foil was then weighed again, and the weight difference (in mg) was recorded as mg of fogging condensate.

Results are summarised in Table 6.

**Table 6**

| Example Catalyst | 6a Dimethyltin dioleate | 6b Dibutyltin dilaurate (comparison) | 6c Dimethyltin dineodecanoate (comparison) |
|---|---|---|---|
| Fogging condensate (mg) | 21.5 | 194.2 | 234.4 |

### Example 7

### Determination of the Fogging of Polyurethane Foams by Gravimetry

### Foams based on Polyether Polyols and aromatic Isocyanate (MDI)

The foam samples prepared in Example 5 were cut into round disks (each 80 mm in diameter, and 10 g of weight). Example 6 was repeated with the difference, that instead of 5 g of the resp. liquid organotin catalyst and 0.5 g of water, now the resp. foam disks were placed onto the bottom of the glass beaker.

Results are summarised in Table 7.

**Table 7**

| Example Foam sample | 7a Foam prepared with Dimethyltin dioleate | 7b Foam prepared with Dibutyltin dilaurate (comparison) | 7c Foam prepared with Dimethyltin dineodecanoate (comparison) |
|---|---|---|---|
| Fogging condensate (mg) | 1.15 | 1,51 | 3.45 |

In view of the many changes and modifications that can be made without departing from principles underlying the invention, reference should be made to the appended claims for an understanding of the scope of the protection to be afforded the invention.

## Claims

1. Plastic articles with low emission obtainable by polymerization, condensation, and/or cross-linking reaction including the use of metal catalysts wherein said metal catalyst has a low emissivity and is an organotin compound of the general formula
**R**_{**2**}**SnX**_{**2**}
wherein R is a C₁-C₈-hydrocarbyl, X is a carboxylate group with 14-20 carbon atoms having at least one olefinic double bond with the proviso that
a) said plastic article is not made of polyvinyl chloride including dimethyltin dioleate or dibutyltin dioleate as heat stabilizer,
b) said organotin compound is not dibutyltin dioleate and said plastic article is not a polyurethane foam,
c) said organotin compound is not dibutyltin diricinoleate and said plastic article is not a polyurethane,
d) said organotin compound is not dibutyltin dioleate and said plastic article is not polyester or cured silicone.

2. Plastic article according to claim 1, wherein in said organotin compound R is an aliphatic, saturated alkyl group.

3. Plastic article according to claim 2, wherein in said organotin compound at least one alkyl group is methyl, butyl, or octyl.

4. Plastic article according to anyone of claims 1 to 3, wherein in said organotin compound X is a carboxylate group derived from a carboxylic acid of the type
**R'-COOH**
wherein R' is a C₁₃-C₁₉-hydrocarbyl group having one or more olefinic double bonds.

5. Plastic article according to claim 4, wherein said olefinic double bonds are isolated double bonds.

6. Plastic article according to claim 4 or 5, wherein R' is an aliphatic, substituted or unsubstituted alkenyl group.

7. Plastic article according to anyone of the preceding claims, wherein in said organotin compound said hydrocarbyl and/or carboxylate group is a linear group.

8. Plastic article according to anyone of the preceding claims, wherein in said organotin compound the carboxylate group is selected from:
oleate, ricinoleate, linoleate and linoleate.

9. Plastic article according to anyone of the preceding claims, wherein said organotin compound is liquid at room temperature (20-25°C).

10. Plastic article according to anyone of the preceding claims, wherein said plastic article is made of polyurethane or polysilicone.

11. Plastic article according to anyone of the preceding claims, wherein said plastic article is a foamed article.

12. Plastic article of claim 11, wherein the polyurethane foam is derived from aliphatic isocyanate.

13. Use of an organotin compound according to anyone of claims 1 to 10 in the manufacture of plastic articles with low emissivity of said organotin compound.

14. The use of claim 13, wherein said plastic article is a foamed article.

15. The use of claim 13 or 14, wherein said plastic article is made of polyurethane or polysilicone.

16. The use of any of claims 13 to 15 wherein said organotin compound is dioctyltin dicarboxylate.

17. The use of claim 16 wherein the carboxylate group is selected from:
oleate, ricinoleate, linoleate and linoleate.

18. The use of claim 17 wherein the organotin compound is dioctyl dioleate.
